# EUROPEAN PATENT APPLICATION

(11) **EP 3 264 258 A1**
(43) Date of publication of application: **03.01.2018**
(21) Application number: 15883352.5
(22) Date of filing: 26.11.2015
(51) Int. Cl.: G06F 3/16, G10L 15/22

(54) **INFORMATION PROCESSING DEVICE, INFORMATION PROCESSING METHOD, AND PROGRAM**

(30) Priority: 27.02.2015 JP 2015039138
(71) Applicant: Sony Corporation, Tokyo 108-0075 (JP)
(72) Inventor: AOYAMA, Kazumi, Tokyo 108-0075 (JP); ITO, Yoko, Tokyo 108-0075 (JP)
(74) Representative: MFG Patentanwälte Meyer-Wildhagen Meggle-Freund Gerhard PartG mbB
(86) International application number: PCT/JP2015/083232
(87) International publication number: WO 2016/136062

(57) **Abstract**

[Object] To control a response to a sound input in a preferred mode corresponding to a change in a situation or a user.

[Solution] An information processing device including: a control unit configured to control output of a response to speech of a user in accordance with acquired information regarding a speech state of the user.

## Description

### Technical Field

The present disclosure relates to an information processing device, an information processing method, and a program.

### Background Art

In recent years, sound combination technologies of converting text information into sounds, sound recognition technologies of recognizing content uttered by users as text information, and natural language processing technologies of recognizing content indicated by sentences have been developed. Therefore, interactive user interfaces (UIs) which are based on sound inputs and are configured to be able to manipulate various household electrical appliances such as television receivers or information devices such as personal computers have been spread by applying the technologies and allowing users to execute dialogs with the devices by sounds. For example, Patent Literature 1 discloses an example of an information processing device capable of instructing a user to execute an intended operation through a dialog with the user.

### Citation List

### Patent Literature

- Patent Literature 1:: JP 2005-3926A

### Disclosure of Invention

### Technical Problem

On the other hand, there are phrases used in dialogs that have the same meaning but are expressed using different phrases (that is, phrases expressed differently) such as "3 pm" and "15:00," and everyday phrases differ with each user. Therefore, when responses to sound inputs of users are output with different expressions from everyday phrases used by the users, the users feel uncomfortable with the responses in some cases.

In addition, situations in which dialogs with users are executed (for example, user states or surrounding environments) may not normally be constant. In different situations, there are cases in which users may feel uncomfortable with responses that the users would feel were natural in some situations.

Therefore, for interactive user interfaces based on sound inputs, there are requests for realizing dialogs with users in more natural (that is, less uncomfortable) modes in accordance with changes in situations or users.

Accordingly, the present disclosure proposes an information processing device, an information processing method, and a program capable of controlling a response to a sound input in a preferred mode corresponding to a change in a situation or a user.

### Solution to Problem

According to the present disclosure, there is provided an information processing device including: a control unit configured to control output of a response to speech of a user in accordance with acquired information regarding a speech state of the user.

Further, according to the present disclosure, there is provided an information processing method including: controlling, by a processor, output of a response to speech of a user in accordance with acquired information regarding a speech state of the user.

Further, according to the present disclosure, there is provided a program causing a computer to execute: controlling output of a response to speech of a user in accordance with acquired information regarding a speech state of the user.

### Advantageous Effects of Invention

According to the present disclosure, as described above, it is possible to provide an information processing device, an information processing method, and a program capable of controlling a response to a sound input in a preferred mode corresponding to a change in a situation or a user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram illustrating an overview of an information processing device according to an embodiment of the present disclosure.
[FIG. 2] FIG. 2 is a block diagram illustrating an example of a functional configuration of the information processing device according to the embodiment.
[FIG. 3] FIG. 3 is an explanatory diagram illustrating analysis of meaning content indicated by a sound input and an example of a process based on a result of the analysis.
[FIG. 4] FIG. 4 is an explanatory diagram illustrating an example of a relation between the degree of composure and a user state.
[FIG. 5] FIG. 5 is an explanatory diagram illustrating an example of a relation between the degree of composure and a user state.
[FIG. 6] FIG. 6 is an explanatory diagram illustrating an example of a relation between the degree of composure and a user state.
[FIG. 7] FIG. 7 is an explanatory diagram illustrating an example of a response parameter stored as continuous information.
[FIG. 8] FIG. 8 is a flowchart illustrating an example of the flow of a series of operations of the information processing device according to the embodiment.
[FIG. 9] FIG. 9 is a flowchart illustrating an example of an operation of the information processing device according to the embodiment.
[FIG. 10] FIG. 10 is a flowchart illustrating an example of an operation of the information processing device according to the embodiment.
[FIG. 11] FIG. 11 is an explanatory diagram illustrating an overview of the information processing device 1 according to a first modification example.
[FIG. 12] FIG. 12 is an explanatory diagram illustrating an overview of the information processing device 1 according to a first modification example.
[FIG. 13] FIG. 13 is an explanatory diagram illustrating an example of the information processing device according to the embodiment.
[FIG. 14] FIG. 14 is an explanatory diagram illustrating an example of the information processing device according to the embodiment.
[FIG. 15] FIG. 15 is an explanatory diagram illustrating an example of the information processing device according to the embodiment.
[FIG. 16] FIG. 16 is an explanatory diagram illustrating an example of the information processing device according to the embodiment.
[FIG. 17] FIG. 17 is a diagram illustrating an example of a hardware configuration of the information processing device according to the embodiment.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Also, the description will be made in the following order.
1. Overview
2. Functional configuration
3. Process
4. Modification examples
4.1. First modification example: feedback of various recognized states
4.2. Second modification example: control example of response content according to individual recognition result and situation
5. Example
6. Hardware configuration
7. Conclusion

### <1. Overview>

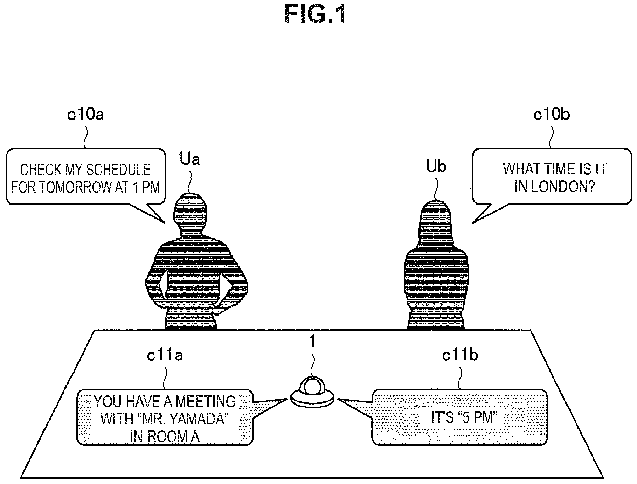

First, an overview of an information processing device according to an embodiment of the present disclosure will be described and a task of the information processing device according to the embodiment will be outlined with reference to FIG. 1. FIG. 1 is an explanatory diagram illustrating an overview of an information processing device 1 according to the embodiment.

As illustrated in FIG. 1, the information processing device 1 according to the embodiment is configured to use a sound produced by a user as input information (hereinafter referred to as a "sound input") by applying a so-called interactive user interface (UI) to execute various processes on the basis of the sound input. Specifically, the information processing device 1 recognizes content spoken by the user by acquiring the sound input from the user as acoustic information and analyzing the acoustic information on the basis of a sound recognition technology or a natural language processing technology. Then, the information processing device 1 executes various processes in accordance with the content recognized on the basis of the sound input and presents a natural sentence indicating the execution result as a sound (acoustic information) or text information (display information) to the user.

For example, in the example illustrated in FIG. 1, the information processing device 1 receives a sound input c10b "What time is it in London?" from a user Ub, confirms the time in London, and outputs response information c11b "It's 5:00 pm" as a sound on the basis of a result of the confirmation.

In this case, for example, on the basis of the analysis result of the sound input c10b, the information processing device 1 recognizes instruction content (that is, confirming the current time in London) indicated by the sound input c10b. Then, on the basis of a recognition result of the instruction content indicated by the sound input c10b, the information processing device 1 confirms the time in London, for example, by executing an application (for example, an application supplying a clocking function) for confirming the time in different countries. Then, on the basis of a confirmation result of the time, the information processing device 1 generates the response information c11b for presenting the confirmation result as a natural sentence and outputs the response information c11b as a sound.

In addition, the information processing device 1 may recognize an individual user on the basis of an analysis result of a sound input or acquired information (for example, captured image information) other than the sound input by a so-called individual recognition technology and execute various processes in accordance with the recognition result.

For example, in the example illustrated in FIG. 1, the information processing device 1 receives the sound input c10a "Check my schedule for tomorrow at 1 pm" from the user Ua, confirms the schedule of the user Ua, and outputs response information c11a "You have a meeting with Mr. Yamada in room A" as a sound on the basis of a result of the confirmation.

In this case, for example, on the basis of an analysis result of the sound input c10a, the information processing device 1 recognizes instruction content indicated by the sound input c10a (that is, confirming tomorrow's schedule at 1 pm). In addition, for example, on the basis of the analysis result of the sound input c10a or an image of the user Ua captured by a different imaging unit (not illustrated), the information processing device 1 individually recognizes the user Ua. Then, on the basis of a recognition result of the instruction content indicated by the sound input c10a or a result of the individual recognition of the user Ua, the information processing device 1 confirms the schedule of the user Ua registered in, for example, an application for managing schedules by executing the application. Then, on the basis of a confirmation result of the schedule, the information processing device 1 generates the response information c11a for presenting the confirmation result as a natural sentence and outputs the response information c11a as a sound.

In this configuration, the user talks with the information processing device 1 by sound to cause the information processing device 1 to execute various functions.

On the other hand, in phrases used in dialogs between people (that is, users), there are phrases with the same meaning but expressed differently, such as "3 pm" and "15:00," and everyday phrases differ with each speaker (that is, speaking styles are different) in some cases. Therefore, for example, when the information processing device 1 outputs "15:00" as a response indicating a time to a user who normally says "3 pm," the user may feel uncomfortable with the different response from the speaking style of the user in some cases.

A difference in the speaking style is not limited to the names of times as shown above, but names of peoples can be exemplified as other specific examples. For example, a certain user calls a person with the name "Taro Yamada" by adding an honorific title to the surname such as "Mr. Yamada" in some cases. In addition, another user calls the person with the name "Taro Yamada" using only the first name "Taro" in some cases. In this case, when the information processing device 1 outputs a response calling the person with the name "Taro Yamada" by his full name "Taro Yamada," a user who calls him "Mr. Yamada" may feel uncomfortable with the response in some cases.

In addition, a situation (for example, a user state or a surrounding environment) in which the information processing device 1 and the user talk may not normally be constant and the situation dynamically changes in sequence in many cases. In particular, in recent years, information processing devices such as smartphones, tablet terminals, and wearable terminals configured to be carried by users have recently become more common, and such information processing devices include so-called interactive UIs in some cases. In this way, as the types of information processing devices are diversified, use scenes of the information processing devices (that is, states or situations in which the information processing devices are used) are also diversified. Thus, situations in which the information processing devices 1 and users talk are also diverse and the situations dynamically change in some cases.

Under these conditions, even when the information processing device 1 controls an output mode (for example, a volume or a speech speed) of a response so that a user feels more natural in accordance with a predetermined situation, the user may feel uncomfortable with the response in other situations in some cases. Specifically, it can be assumed that when the information processing device 1 outputs sound information indicating a response with a predetermined volume, a user may find the response easy to hear or find the response difficult to hear in accordance with the volume of an environmental sound in a surrounding environment.

In addition, it can also be assumed that whether the user feels that a response output from the information processing device 1 is more natural changes depending on a user state. As a specific example, in a state in which the user hurries, the user pays more attention to many things (for example, a surrounding environment of the user) other than the information processing device 1 than in a state in which the user is calm (for example, a state in which the user does not hurry) in some cases. Therefore, in such a situation, when the information processing device 1 outputs a response of a relatively long natural sentence, the user may feel bothered by the length of the response in some cases.

Accordingly, a purpose of the information processing device 1 according to the embodiment is to realize a mode in which a user feels that a dialog with the user is more natural (less uncomfortable) in accordance with a change in a user or a situation (for example, a user state or a surrounding environment). Also, hereinafter, features of the information processing device 1 according to the embodiment will be described in more detail.

### <2. Functional configuration>

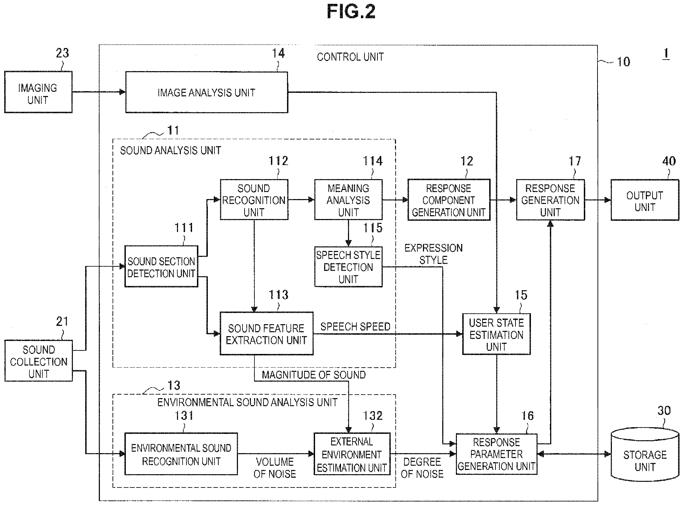

In addition, an example of a functional configuration of the information processing device 1 according to the embodiment will be described with reference to FIG. 2. FIG. 2 is a block diagram illustrating an example of the functional configuration of the information processing device 1 according to the embodiment.

As illustrated in FIG. 2, the information processing device 1 according to the embodiment includes a control unit 10, a sound collection unit 21, a storage unit 30, and an output unit 40. In addition, the information processing device 1 may include an imaging unit 23. Also, the example illustrated in FIG. 2 is an example in which the information processing device 1 includes the sound collection unit 21, the imaging unit 23, the storage unit 30, and the output unit 40, but the invention is not necessarily limited to the same configuration. That is, at least some of the sound collection unit 21, the imaging unit 23, the storage unit 30, and the output unit 40 may be installed outside of the information processing device 1.

The sound collection unit 21 is configured to acquire a sound input from the user or acoustic information such as a so-called environmental sound such as background noise. For example, the sound collection unit 21 can be configured by a sound collection device such as a microphone that collects acoustic information from the surroundings. In addition, the sound collection unit 21 may be configured to include a plurality of sound collection devices (for example, a microphone array) and to be able to estimate an arrival direction of the collected acoustic information in accordance with a sound collection result of each sound collection device. The sound collection unit 21 outputs the acquired acoustic information to a sound analysis unit 11 and an environmental sound analysis unit 13.

The imaging unit 23 includes an optical system such as a lens and an image sensor such as a complementary metal-oxide semiconductor (CMOS) image sensor or a charge coupled device (CCD) image sensor and is configured to capture an image of a subject. The imaging unit 23 outputs a captured image to an image analysis unit 14.

Also, although not explicitly illustrated in FIG. 2, an operation related to acquisition of the acoustic information by the sound collection unit 21 and an operation related to capturing of an image by the imaging unit 23 may be controlled by, for example, the control unit 10. As a specific example, the control unit 10 may cause the sound collection unit 21 to acquire acoustic information on the basis of an instruction from a user via an input device (not illustrated). Similarly, the control unit 10 may cause the imaging unit 23 to capture an image on the basis of an instruction from a user via an input device (not illustrated).

The output unit 40 is an output interface used for the information processing device 1 to present information to the user. For example, the output unit 40 may include an acoustic device such as a so-called speaker that outputs a sound or an acoustic sound and outputs information presented to the user as a sound or an acoustic sound. In addition, the output unit 40 may include a display device such as a liquid crystal display (LCD) device or an organic EL (organic light emitting diode (OLED)) display and output information to present to the user as display information.

The control unit 10 includes a sound analysis unit 11, a response component generation unit 12, an environmental sound analysis unit 13, an image analysis unit 14, a user state estimation unit 15, a response parameter generation unit 16, and a response generation unit 17.

The sound analysis unit 11 is configured to recognize meaning content indicated by a sound input from the user included in the acoustic information or extract features (for example, the magnitude of a sound and a speed of speech (speech speed)) of the sound input by analyzing the acquired acoustic information. The sound analysis unit 11 includes a sound section detection unit 111, a sound recognition unit 112, a sound feature extraction unit 113, a meaning analysis unit 114, and a speech style detection unit 115.

The sound section detection unit 111 acquires the collected acoustic information from the sound collection unit 21. The sound section detection unit 111 detects a section occupied by the sound input (hereinafter referred to as a "sound section" in some cases) in the acoustic information by analyzing the acquired acoustic information. Also, a method of detecting the sound section is not particularly limited as long as the sound section detection unit 111 can detect the sound section from the acquired acoustic information.

As a specific example, the sound section detection unit 111 may detect a sound section on the basis of zero-crossings and an amplitude of an acoustic signal acquired as the acoustic information. In this case, for example, the sound section detection unit 111 recognizes a timing at which the number of zero-crossings exceeds a predetermined threshold in regard to the amplitude exceeding a predetermined level in the acoustic signal acquired as the acoustic information as the beginning of the sound section. In addition, the sound section detection unit 111 recognizes a timing at which the amplitude of the acoustic signal is equal to or less than a predetermined level after start of the sound section as the termination of the sound section.

In addition, as another example, the sound section detection unit 111 may extract a feature amount indicating a feature of a predefined sound signal from the acoustic signal acquired as the acoustic information and recognize the beginning and the termination of a sound section on the basis of the extracted feature amount. As an example of a method of detecting a sound section by extracting a feature amount of a sound signal from the acoustic signal, for example, a method of detecting a sound section based on a Gaussian mixture model (GMM) can be exemplified.

In addition, for example, the sound section detection unit 111 may extract a frequency component equivalent to the sound signal from the acoustic signal acquired as the acoustic information and set the extracted frequency component as an analysis target.

In this way, the sound section detection unit 111 detects a sound section from the acquired acoustic information and extracts a portion (that is, an acoustic signal) equivalent to the sound section as a sound input from the acoustic information. Then, the sound section detection unit 111 outputs the extracted sound input to the sound recognition unit 112 and the sound feature extraction unit 113.

The sound recognition unit 112 acquires the sound input included in the collected acoustic information from the sound section detection unit 111. The sound recognition unit 112 analyzes the acquired sound input on the basis of a sound recognition technology to convert the sound input into text information. Then, the sound recognition unit 112 outputs the text information obtained by converting the sound input to the sound feature extraction unit 113 and the meaning analysis unit 114.

The sound feature extraction unit 113 acquires the sound input included in the collected acoustic information from the sound section detection unit 111. In addition, the sound feature extraction unit 113 acquires the text information obtained by converting the sound input on the basis of the sound recognition technology from the sound recognition unit 112.

The sound feature extraction unit 113 detects the magnitude of a sound (that is, a volume of the sound input), for example, on the basis of the amplitude of the sound signal by analyzing the sound signal acquired as the sound input. Then, the sound feature extraction unit 113 outputs information indicating the detected magnitude of the sound to an external environment estimation unit 132 of the environmental sound analysis unit 13 to be described below.

In addition, the sound feature extraction unit 113 calculates a speech speed on the basis of the length of the acquired sound input (that is, the length of a speech section) and the length of the text information (for example, the number of letters) obtained by converting the sound input. Then, the sound feature extraction unit 113 outputs information indicating the calculated speech speed to the user state estimation unit 15 to be described below.

The meaning analysis unit 114 acquires the text information obtained by converting the sound input on the basis of the sound recognition technology from the sound recognition unit 112. The meaning analysis unit 114 recognizes meaning content indicated by the text information (in other words, meaning content indicated by the sound input) by executing analysis (for example, vocabulary analysis (morphological analysis), syntax analysis, and meaning analysis) based on a natural language processing technology on the acquired text information (that is, the text information obtained by converting the sound input).

Also, a method of the analysis based on the natural language processing technology is not particularly limited as long as the meaning analysis unit 114 can recognize meaning content indicated by the acquired text information. As a specific example, the meaning analysis unit 114 may use, as a scheme for the meaning analysis, a scheme of recognizing the meaning content of the text information on the basis of a result of machine learning or a scheme of recognizing the meaning content of the text information on the basis of a preset rule. In addition, although various kinds of information (for example, dictionary information) for executing the analysis based on the natural language processing technology on the acquired text information are not illustrated in FIG. 2, storage locations of the various kinds of information are not particularly limited as long as the various kinds of information are stored in advance at a position which can be read by the meaning analysis unit 114.

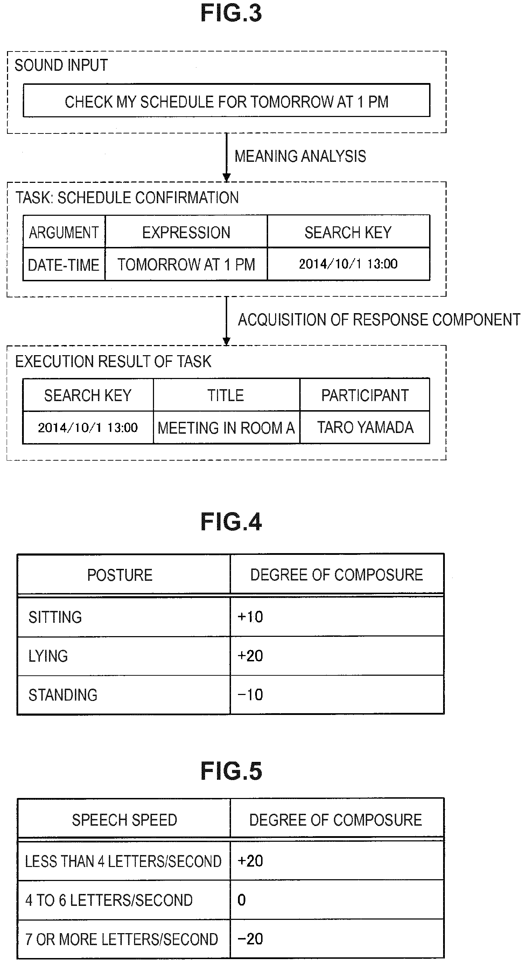

In addition, the meaning analysis unit 114 specifies a task to be executed and an argument for executing the task in accordance with a result of the analysis based on the natural language processing technology (hereinafter simply referred to as a "natural language processing result" in some cases) on the acquired text information. Here, the details of the process by the meaning analysis unit 114 will be described with reference to FIG. 3 giving a specific example. FIG. 3 is an explanatory diagram illustrating analysis of meaning content indicated by a sound input and an example of a process based on a result of the analysis. FIG. 3 illustrates an example of an operation of the meaning analysis unit 114 and the response component generation unit 12 to be described below.

FIG. 3 illustrates a case in which a user says "Check my schedule for tomorrow at 1 pm" to the information processing device 1 to confirm the schedule. That is, in the case of the example illustrated in FIG. 3, the meaning analysis unit 114 acquires text information "Check my schedule for tomorrow at 1 pm" as the text information obtained by converting the sound input on the basis of a sound recognition technology, from the sound recognition unit 112.

The meaning analysis unit 114 specifies a task of "schedule confirmation" as a task to be executed (that is, a task for generating a response to an inquiry from the user) on the acquired text information "Check my schedule for tomorrow at 1 pm" on the basis of the natural language processing technology by analyzing the text information.

As a more specific example, the meaning analysis unit 114 extracts morphemes from the text information by executing morpheme analysis on the acquired text information "Check my schedule for tomorrow at 1 pm." Then, the meaning analysis unit 114 recognizes that the task "schedule confirmation" is instructed to be executed by the user on the basis of keywords "schedule" and "check" of the extracted morphemes.

In addition, when the meaning analysis unit 114 specifies the task to be executed on the basis of the instruction from the user, the meaning analysis unit 114 extracts an argument necessary to execute a specified task from the acquired text information "Check my schedule for tomorrow at 1 pm."

As a more specific example, the meaning analysis unit 114 extracts the keywords "tomorrow at 1 pm" as an argument indicating a date and time necessary to execute the task "schedule confirmation" from a result of the morpheme analysis on the acquired text information "Check my schedule for tomorrow at 1 pm."

Also, phrases used in a dialog between the user and the information processing device 1 include meanings which may not be uniquely specified in only the phrases. For example, the phrase "tomorrow" is an expression for specifying a date relatively and the date designated as "tomorrow" is uniquely specified by confirming a date serving as a standard such as "today."

Therefore, when the meaning analysis unit 114 extracts, for example, the keyword "tomorrow" as an argument necessary to execute a specified task, the meaning analysis unit 114 confirms the date "today" on the basis of a calendar function or the like and specifies the date designated as "tomorrow" on the basis of a confirmation result of the date "today." For example, when the date of "today" is "9/30/2014" (that is, September 30, 2014), the meaning analysis unit 114 specifies "10/1/2014 (that is, October 1, 2014)" as the date designated as "tomorrow." Then, the meaning analysis unit 114 replaces the keyword "tomorrow" among the keywords extracted as arguments with the date corresponding to the specified "tomorrow."

Of course, keywords with meanings which may not be uniquely specified in only corresponding phrases are not limited to only information indicating dates or times such as "tomorrow," "today," "the day after tomorrow," and "now." As a specific example, information indicating positions such as "here" and "current location" can be exemplified. For example, when the meaning analysis unit 114 extracts a keyword "current location" as an argument, the meaning analysis unit 114 may specify positional information "current location" on the basis of the Global Positioning System (GPS) and replace the keyword "current location" extracted as the argument with the specified positional information.

In this way, the meaning analysis unit 114 specifies a task to be executed and an argument for executing the task in accordance with a result of natural language processing on acquired text information. Also, the foregoing example is merely an example. The specifying method is not particularly limited as long as the meaning analysis unit 114 can recognize meaning content of acquired text information (that is, text information obtained by converting a sound input) and specify a task to be executed and an argument for executing the task on the basis of the recognized meaning content.

Then, the meaning analysis unit 114 outputs information indicating the specified task to be executed and the argument necessary to execute the task to the response component generation unit 12 to be described below. In addition, the meaning analysis unit 114 outputs a result of the natural language processing on the text information obtained by converting the sound input (for example, a result of vocabulary analysis (morphological analysis), syntax analysis, and meaning analysis) to the speech style detection unit 115.

The speech style detection unit 115 acquires the result of the natural language processing on the text information obtained by converting the sound input from the meaning analysis unit 114. On the basis of the acquired result of the natural language processing, the speech style detection unit 115 extracts phrases of which expressions to be used are different in some cases (hereinafter referred to as "unique expressions" in some cases) from the text information obtained by converting the sound input in accordance with a change in a user or a situation.

Also, as the unique expressions, for example, phrases with different expressions such as proper nouns such as personal names or place names, dates, and times can be exemplified. As a specific example, the word "tomorrow" can be expressed as "tomorrow," "the next day," and "the day after today" and an expression to be used differs depending on a user. In addition, even when a personal name is focused on, as described above, a person with the name "Taro Yamada" can be called by different expressions such as "Mr. Yamada," "Taro," or "Taro Yamada" depending on a user in some cases.

In this way, the speech style detection unit 115 extracts unique expressions from text information obtained by converting the sound input on the basis of the result of the natural language processing on the text information.

Also, the phrases extracted as the unique expressions by the speech style detection unit 115 are not necessarily limited to proper nouns such as personal names or place names, dates, and times as long as the phrases are phrases of which expressions to be used are different in accordance with a change in a user or a situation. As a specific example, the speech style detection unit 115 may extract phrases corresponding to so-called dialects as unique expressions.

Then, on the basis of the result of the natural language processing on the text information obtained by converting the sound input, the speech style detection unit 115 outputs the unique expressions extracted from the text information as information indicating a speech style to the response parameter generation unit 16 to be described below.

The environmental sound analysis unit 13 is configured to extract an environmental sound in a surrounding environment by analyzing the acquired acoustic information and extract features of the environmental sound. Also, in the description, an operation of the environmental sound analysis unit 13 will be described giving an example of a case in which the environmental sound analysis unit 13 extracts the "degree of noise" indicating the degree of a volume of noise of a surrounding environment with respect to a volume of the sound input as a feature of the environmental sound. The environmental sound analysis unit 13 includes an environmental sound recognition unit 131 and an external environment estimation unit 132.

The environmental sound recognition unit 131 acquires the collected acoustic information from the sound collection unit 21. The environmental sound recognition unit 131 extracts an environmental sound (that is, acoustic information other than the sound input) from the acoustic information by analyzing the acquired acoustic information. Also, a method of extracting the environmental sound is not particularly limited as long as the environmental sound recognition unit 131 can extract the environmental sound from the acquired acoustic information.

As a specific example, the environmental sound recognition unit 131 detects a direction in which the user (that is, a speaker) is located with respect to the information processing device 1 (that is, an arrival direction of a target sound) and forms a filter with a blind spot (null beam) in that direction. Then, the environmental sound recognition unit 131 may extract another piece of sound information other than the sound input from the user as an environmental sound from the acoustic information by applying the formed filter to the acoustic information collected by the sound collection unit 21.

Also, the detection method is not particularly limited as long as the environmental sound recognition unit 131 can specify a direction in which a user is located with respect to the information processing device 1. As a specific example, a direction in which the user is located with respect to the information processing device 1 may be detected on the basis of the position of the user in an image acquired as an analysis result of the image captured by the imaging unit 23. In addition, as another example, a direction in which a user is located with respect to the information processing device 1 may be detected on the basis of an arrival direction of acoustic information collected by the sound collection unit 21. In addition, when a situation in which the information processing device 1 is used is restricted in accordance with a state in which the information processing device 1 such as a so-called wearable terminal is worn by the user, the direction in which the user is located with respect to the information processing device 1 may be specified on the basis of the wearing state.

In addition, as another example, the environmental sound recognition unit 131 may extract a frequency component other than a sound signal from an acoustic signal acquired as the acoustic information and set the extracted frequency component as an analysis target for extracting an environmental sound.

Subsequently, the environmental sound recognition unit 131 detects the volume of the environmental sound by analyzing the acoustic signal of the environmental sound extracted from the acoustic information. As a specific example, the environmental sound recognition unit 131 may detect the volume of the environmental sound on the basis of the amplitude of the acoustic signal. Then, the environmental sound recognition unit 131 outputs information indicating the detected volume of the environmental sound as information indicating the volume of noise to the external environment estimation unit 132.

The external environment estimation unit 132 acquires the information indicating the volume of noise from the environmental sound recognition unit 131. In addition, the external environment estimation unit 132 acquires information indicating the magnitude of a sound (that is, the volume of the sound input) from the sound feature extraction unit 113 of the sound analysis unit 11. Then, the external environment estimation unit 132 calculates, as the degree of noise, a numerical value (for example, an SN ratio) indicating the magnitude of the volume of noise with respect to the volume of a target sound (that is, the magnitude of the sound) when the sound input from the user is set as the target sound. The external environment estimation unit 132 outputs information indicating the calculated degree of noise to the response parameter generation unit 16 to be described below.

The image analysis unit 14 is configured to recognize a user captured in an image on the basis of a result of image analysis by executing the image analysis on the captured image and acquire information regarding the user.

Specifically, the image analysis unit 14 acquires an image of a subject imaged by the imaging unit 23. The image analysis unit 14 executes the image analysis on an acquired image and extracts a captured user from the image on the basis of a result of the image analysis. Also, the extraction method is not particularly limited as long as the captured user can be extracted from the image at this time. As a specific example, the image analysis unit 14 may extract the captured user from a processing target image by extracting feature shapes unique to the user, such as the face of the person and body parts such as hands and legs, from the image.

The image analysis unit 14 individually recognizes a user extracted from the image by executing an analysis process based on a so-called individual recognition technology on the user. Also, as the individual recognition technology based on an image, for example, a technology for recognizing an individual user on the basis of an image of the face of the user can be exemplified. Of course, it is needless to say that the recognition method is not limited as long as an individual user extracted from an image can be recognized. In addition, as long as various kinds of information (for example, dictionary information) for recognizing an individual person on the basis of a result of the image analysis on the acquired image are stored in advance at positions from which the information can be read by the image analysis unit 14, although not illustrated in FIG. 2, the storage locations of the various kinds of information are not particularly limited.

In addition, the image analysis unit 14 may estimate information (for example, attribute information) regarding the user state or the user, such as a posture, an age, and a sex of the user, on the basis of the result of the image analysis on the acquired image.

Then, the image analysis unit 14 outputs an analysis result of the acquired image, that is, a recognition result of the individual user captured in the image or a result of the estimation of the information regarding the user state or the user, such as the posture, the age, and the sex, to the user state estimation unit 15 to be described below.

The user state estimation unit 15 is configured to estimate various states of the user on the basis of various kinds of acquired information such as the analysis result of the captured image or the analysis result of the acquired sound input. Also, in the description, an operation of the user state estimation unit 15 will be described giving an example of a case in which the user state estimation unit 15 calculates the "degree of composure" which is a parameter for determining a psychological state of the user (specifically, whether the user is calm) on the basis of the analysis result of the captured image and the analysis result of the acquired sound input.

For example, the user state estimation unit 15 calculates the degree of composure of the user by adding or subtracting (in other words, weighting) a preset initial value of the degree of composure in accordance with a user state recognized on the basis of the analysis result of the captured image or the analysis result of the acquired sound input. For example, FIGS. 4 to 6 are explanatory diagrams illustrating an example of a relation between the degree of composure and various user states.

As a specific example, FIG. 4 is a diagram illustrating an example of a relation between the degree of composure and a posture of the user recognized on the basis of the analysis result of the captured image. In the example illustrated in FIG. 4, the user state estimation unit 15 adds the degree of composure so that it is easy to recognize that the user is calm when the posture of the user is a "sitting" state or a "lying" state. In addition, the user state estimation unit 15 subtracts the degree of composure so that it is easy to recognize that the user is in a hurried state when the posture of the user is a "standing" state. In addition, in the example illustrated in FIG. 4, when the posture of the user is the "lying" state, a larger value than an addition value of the "sitting" state is set as an addition value of the "lying" state so that it is recognized that the user is more calm than when the posture of the user is the "sitting" state.

In addition, FIG. 5 is a diagram illustrating an example of a relation between the degree of composure and a speech speed of the sound input recognized on the basis of the analysis result of the acquired sound input. In the example illustrated in FIG. 5, the user state estimation unit 15 adds the degree of composure so that it is easy to recognize that the user is calm when a speech speed of "4 to 6 letters/second" is used as a standard value of a speech speed and a speech speed is slower than the standard value (that is, the speech speed is "less than 4 letters/second"). In addition, the user state estimation unit 15 subtracts the degree of composure so that it is easy to recognize that the user is in a hurried state when a speech speed is faster than the standard value (that is, the speech speed is "7 or more letters/second").

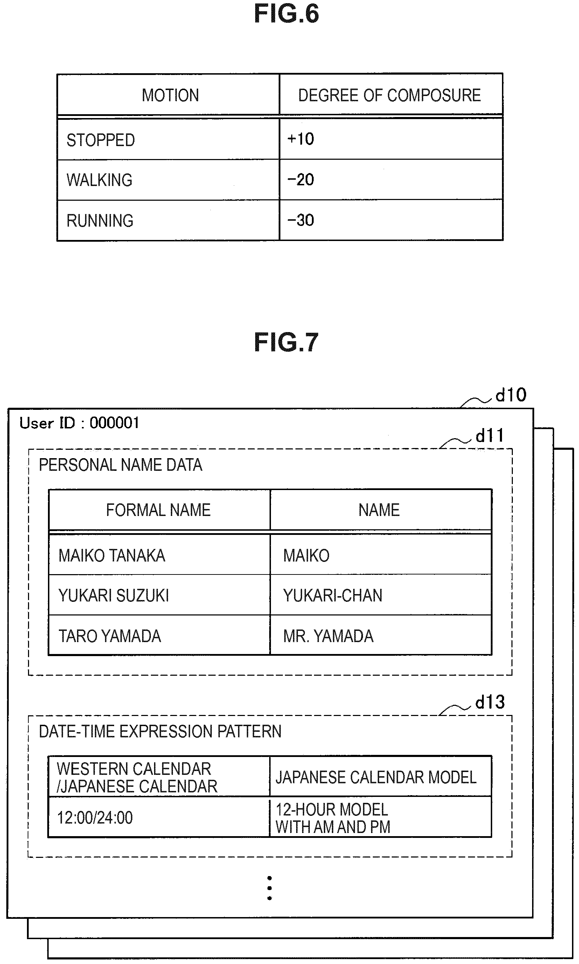

In addition, FIG. 6 is a diagram illustrating an example of a relation between the degree of composure and a motion of the user (in other words, a behavior of the user). In the example illustrated in FIG. 6, addition or subtraction values of the degree of composure are exemplified when the user is "stopped," "walking," and "running." Specifically, the user state estimation unit 15 adds the degree of composure so that it is easy to recognize that the user is calm when the user is "stopped." In addition, the user state estimation unit 15 subtracts the degree of composure so that it is easy to recognize that the user is in a hurried state when the user is "walking" or "running." In addition, in the example illustrated in FIG. 6, when the user is "running," a larger value than the subtraction value of the "walking" case is set as a subtraction value of the "running" case so that it is recognized that the user is in a more hurried state than when the user is "walking."

Also, when the example illustrated in FIG. 6 is applied, the estimation method is not particularly limited as long as the user state estimation unit 15 can estimate a behavior of the user (a motion of the user). As a specific example, the user state estimation unit 15 may estimate a behavior of the user on the basis of a detection result of any of various sensors (for example, an acceleration sensor or an angular velocity sensor) detecting a change in a position or a direction of a casing (for example, the information processing device 1 configured as a wearable terminal) carried by the user. In addition, as another example, the user state estimation unit 15 may estimate a behavior of the user (for example, the user is moving) on the basis of a change in positional information of a casing carried by the user and detected by the GPS or the like.

In this way, the user state estimation unit 15 calculates the "degree of composure" on the basis of, for example, at least some of the recognized information among the "posture of the user," the "speech speed of the sound input," and the "behavior of the user."

In this way, in the examples described with reference to FIGS. 4 to 6, the user states "posture of the user," "speech speed of the sound input," and "behavior of the user" can be associated with the user state (the psychological state of the user) "degree of composure." In other words, the user state estimation unit 15 can manage a user state detected (estimated) directly on the basis of the acquired information "posture of the user," "speech speed of the sound input," and "behavior of the user" as the more abstract user state such as the "degree of composure."

In this configuration, for example, when at least one of the "posture of the user," the "speech speed of the sound input," and the "behavior of the user" is a plurality of different states and the "degree of composure" is the same, the user state estimation unit 15 can also recognize the plurality of states as the same state.

Also, in accordance with a recognition result of the individual user, the user state estimation unit 15 may dynamically switch between the addition and subtraction values of the degree of composure for each user in accordance with an initial value of the degree of composure or a recognized state. As a specific example, by accumulating information indicating the "posture of the user" for each user, the "speech speed of the sound input," and the "behavior of the user," a usual state of the user (that is, a state serving as a standard) may be derived on the basis of the accumulated information. Thus, for example, the user state estimation unit 15 may calculate the addition or subtraction value of the degree of composure for each user on the basis of relative values of the recognized various states of the user when the usual state is set as the standard.

In addition, the example of the case in which the user state estimation unit 15 estimates the "degree of composure" as the user state has been described above. However, it is needless to say that the user state estimated by the user state estimation unit 15 is not necessarily limited to only the "degree of composure." That is, the user state to be estimated is not particularly limited as long as the user state can be estimated on the basis of the acquired various kinds of information such as the analysis result of the captured image or the analysis result of the acquired sound input.

Then, the user state estimation unit 15 outputs information indicating the estimated user state (for example, the degree of composure) to the response parameter generation unit 16. Also, at this time, the user state estimation unit 15 may output information regarding the user, such as an estimation result of the acquired "age or sex of the user" or a "recognition result of the individual user" to the response parameter generation unit 16.

Also, the example in which the user state estimation unit 15 mainly estimates the user state on the basis of the analysis results of an image and the sound input has been described above, but the present disclosure is not necessarily limited to the same configuration. That is, the type of information used to estimate the user state is not particularly limited as long as the information is information such as an image, a sound input, or detection results by various sensors which can be acquired by the information processing device 1 and on the basis of which the user state can be estimated.

The response parameter generation unit 16 is configured to generate a response parameter on the basis of information regarding the detected user state, situation, or characteristics (for example, language characteristics), such as a detection result of an external environment of the user, information indicating the user state, and a speech style of the user and to manage the response parameter.

For example, the response parameter generation unit 16 acquires a unique expression extracted from the text information as information indicating the speech style on the basis of a result the natural language processing on the text information obtained by converting the sound input from the speech style detection unit 115 of the sound analysis unit 11. In addition, the response parameter generation unit 16 acquires information indicating the degree of noise (in other words, a detection result of an external environment of the user) from the external environment estimation unit 132 of the environmental sound analysis unit 13. In addition, the response parameter generation unit 16 acquires information indicating the user state or information regarding the user, such as the "degree of composure," the "age and the sex of the user," and the "recognition result of the individual user" from the user state estimation unit 15.

In this way, the response parameter generation unit 16 acquires the information regarding the detected user state, situation, or characteristics (for example, language characteristics) (hereinafter referred to as "information regarding the speech state of the user" in some cases). Then, the response parameter generation unit 16 outputs the acquired information regarding the speech state of the user as a response parameter to the response generation unit 17 to be described below.

Also, the acquired "information regarding the speech state of the user" includes transitory information which varies in accordance with every situation, such as the "detection result of the external environment of the user" or the "user state," and continuous information indicating characteristics of the user such as a "speech style of the user."

Therefore, the response parameter generation unit 16 may accumulate a response parameter based on the continuous information indicating the characteristics of the user, such as the "speech style of the user" in the acquired "information regarding the speech state of the user" in the storage unit 30. The storage unit 30 is a storage unit that stores the response parameter generated on the basis of the "information regarding the speech state of the user."

For example, FIG. 7 is an explanatory diagram illustrating an example of the response parameter stored as continuous information. FIG. 7 illustrates an example of the response parameter based on the "speech style of the user."

In the example illustrated in FIG. 7, a response parameter d10 indicating the "speech style of the user" includes personal name data d11 and a date-time expression pattern d13 and a user ID is generated and managed as an identifier for each user. The personal name data d11 is data for managing the speech style regarding calling of a personal name and is stored by associating a "formal name" and a "name" corresponding to the "formal name" with each person. In addition, the date-time expression pattern d13 is data for managing an expression of a calendar or a time. For example, when the user calls a calendar (for example, a "year") a Japanese calendar, information indicating that the Japanese calendar is called is stored as information indicating an expression regarding the calendar in the date-time expression pattern d13. Similarly, when the user calls times "morning" and "afternoon" to distinguish the times from each other, information indicating that "morning" and "afternoon" are distinguished from each other is stored as information indicating an expression regarding a time in the date-time expression pattern d13.

The response parameter generation unit 16 generates the response parameter d10 on the basis of the acquired information indicating the "speech style of the user" and accumulates the response parameter d10 in the storage unit 30 for each of the recognized users in accordance with the acquired recognition result of the individual user.

On the basis of this configuration, the response parameter generation unit 16 may notify the response generation unit 17 of a name in accordance with the speech style of a person producing the sound input on the basis of an instruction from the response generation unit 17 to be described below.

As a specific example, in the example illustrated in FIG. 7, the response parameter generation unit 16 is assumed to receive notification of the name corresponding to "Taro Yamada" from the response generation unit 17. In this case, the response parameter generation unit 16 extracts the response parameter d10 corresponding to the user (that is, the speaker) from the storage unit 30 on the basis of the acquired recognition result of the individual user. Then, the response parameter generation unit 16 recognizes that the "name" of a person whose "normal name" is "Taro Yamada" is "Mr. Yamada" with reference to the personal name data d11 of the extracted response parameter d10 and notifies the response generation unit 17 of information indicating the "name" the recognized "Mr. Yamada." Thus, the response generation unit 17 can generate a response in which the person with the name "Taro Yamada" is called "Mr. Yamada" in accordance with the speech style of the speaker.

Also, the user may not always necessarily use a normal name. As a specific example, a user who normally calls the person with the name "Taro Yamada" "Mr. Yamada" calls the person called "Mr. Taro Yamada" in a certain situation.

In such a case, for example, on the basis of the acquired information indicating the speech style, the response parameter generation unit 16 may recognize that the "name" of the person called "Taro Yamada" is temporarily "Mr. Taro Yamada" in accordance with the name "Mr. Taro Yamada" included in the sound input. In addition, as another example, the response parameter generation unit 16 may call the name of the person called "Taro Yamada" "Mr. Yamada" in accordance with the speech style normally used by the user even in such a situation. Also, the response parameter generation unit 16 may be configured to switch between the operations at the time of selection of one of the foregoing operations on the basis of previous setting by the user.

The response component generation unit 12 is configured to acquire information necessary to generate a response to an inquiry from the user acquired from the sound input. The response component generation unit 12 acquires information indicating a task which is specified on the basis of the result of the natural language processing on the text information obtained by converting the sound input and is to be executed and an argument necessary to execute the task from the meaning analysis unit 114. The response component generation unit 12 executes the task indicated by the information acquired from the meaning analysis unit 114 using the argument acquired together as input information and acquires information necessary to generate a response for the user as the execution result of the task.

For example, in the example illustrated in FIG. 3, "schedule confirmation" is designated as a task to be executed. To execute the task, "13:00 10/1/2014" corresponding to "tomorrow at 1 pm" is designated as the argument of the date-time. Therefore, the response component generation unit 12 causes an application for managing a schedule to search for a schedule corresponding to a search key using "13:00 10/1/2014" designated as the argument as the search key. Also, at this time, the response component generation unit 12 may acquire a result of individual recognition of the user producing the sound input and add the acquired result of the individual recognition to the search key for searching for the schedule.

Then, the response component generation unit 12 acquires a search result of the schedule corresponding to the search key from the application for managing the schedule. In the case of the example illustrated in FIG. 3, the response component generation unit 12 acquires information "Meeting in room A" registered as "title" and information "Taro Yamada" registered as "participant" as the search result of the schedule.

Then, the response component generation unit 12 outputs information indicating a response component and information indicating the executed task using the information acquired as the search result as the response component for generating the response to the sound input from the user to the response generation unit 17 to be described below. Also, at this time, the response component generation unit 12 may output information used as the search key (for example, "13:00 10/1/2014" indicating a date and time) as information indicating the response component to the response generation unit 17 in addition to the information acquired as the search result.

The response generation unit 17 is configured to generate a response to the sound input from the user. The response generation unit 17 acquires the information indicating the response component for generating a response to the sound input from the user and the information indicating the task executed to acquire the response component from the response component generation unit 12.

The response generation unit 17 transmits the acquired information indicating the response component to the response parameter generation unit 16 and acquires information indicating the name of the response component in accordance with the speech style of the user from the response parameter generation unit 16.

As a specific example, the response generation unit 17 is assumed to acquire information "Taro Yamada" indicating the personal name as the information indicating the response component. In this case, for example, the response generation unit 17 acquires information indicating the name "Mr. Yamada" as the information indicating the name of the person called "Taro Yamada" in accordance with the speech style of the user from the response parameter generation unit 16.

In addition, as another example, the response generation unit 17 is assumed to acquire information "13:00" indicating a time as the information indicating the response component. In this case, for example, the response generation unit 17 acquires the information indicating the name "1 pm" as the information indicating the name of the time "13:00" in accordance with the speech style of the user from the response parameter generation unit 16.

Subsequently, the response generation unit 17 recognizes content of an inquiry from the user based on the sound input on the basis of the acquired information indicating the task. As a specific example, in the case of the example illustrated in FIG. 3, on the basis of the acquired information indicating the task, the response generation unit 17 recognizes that the task for "schedule confirmation" is executed in regard to the sound input "Check my schedule for tomorrow at 1 pm" from the user.

Then, the response generation unit 17 generates information (for example, text information) indicating response content on the basis of the recognition result of the executed task and the name in accordance with the speech style of the user corresponding to the response component.

Specifically, when it is recognized that the task for "schedule confirmation" is executed on the basis of the acquired information indicting the task, the response generation unit 17 generates a form of a response for presenting the result of "schedule confirmation" to the user. Then, in regard to the generated form, the response generation unit 17 generates information indicating the response content by inquiring about a name in accordance with the speech style of the user corresponding to the response component in the generated form.

More specifically, the response generation unit 17 generates a form of the response "You have a meeting with Mr. Yamada in room A" as a response to the sound input "Check my schedule for tomorrow at 1 pm." Then, the response generation unit 17 replaces the response component in the generated form with the acquired name corresponding to the response component. That is, in the case of the foregoing example, the response generation unit 17 replaces the response component indicating the personal name "Taro Yamada" with the name "Mr. Yamada" in accordance with the speech style of the user and generates information indicating the response content "You have a meeting with Mr. Yamada in room A."

In addition, the response generation unit 17 may replace the information indicating a time "9/30/2014" or "10/1/2014" with an expression relatively indicating a date such as "today," "tomorrow," or "the day after tomorrow" and generate the information indicating the response content.

As a specific example, the response generation unit 17 is assumed to generate the form of the response "You have a meeting with Mr. Yamada in room A at 13:00 10/1/2014" as the response to the sound input "Check my schedule for tomorrow at 1 pm." In this case, the response generation unit 17 replaces the response component indicating the time "13:00" and the response component indicating the personal name "Taro Yamada" with "1 pm" and "Mr. Yamada" in accordance with the speech style of the user. In addition, the response generation unit 17 may replace the response component indicating the date "10/1/2014" with the name "tomorrow" in accordance with an expression of the sound input (in other words, the speech style). That is, in this case, the response generation unit 17 generates information indicating the response content "You have a meeting with Mr. Yamada in room A tomorrow at 1 pm."

In addition, the response generation unit 17 may change some expressions in the information output as the response content on the basis of the acquired response components. As a specific example, the response generation unit 17 may replace a greeting expression with "good morning," "good afternoon," or "good evening" in accordance with the response component indicating a period of time.

When the information indicating the response content is generated, the response generation unit 17 causes the output unit 40 to output the information indicating the response content. At this time, the response generation unit 17 may generate a sound signal vocalizing the response content on the basis of, for example, a sound combination technology from the text information indicating the response content and cause the output unit 40 to output the sound signal. In addition, the response generation unit 17 may cause the output unit 40 to output the text information indicating the response content as display information.

In addition, at this time, the response generation unit 17 may acquire information regarding a speech state of the user (that is, transitory information) at the time of a dialog between the user and the information processing device 1, such as the "degree of noise" of a surrounding environment of the user or the "degree of composure" of the user from the response component generation unit 12. In this case, the response generation unit 17 may control an output mode of the response in accordance with the acquired information.

As a specific example, the response generation unit 17 may control a volume of the acoustic information output as the response in accordance with the acquired information indicating the "degree of noise." In addition, the response generation unit 17 may control the output mode of the response in accordance with the acquired information indicating the "degree of noise." Specifically, the response generation unit 17 may perform control such that the response is output as acoustic information when the "degree of noise" is equal to or less than a predetermined threshold. The response generation unit 17 may perform control such that the response is output as display information when the "degree of noise" exceeds the predetermined threshold.

In addition, as another example, the response generation unit 17 may control an amount of information output as the response in accordance with the acquired information indicating the "degree of composure."

For example, the information processing device 1 may be configured to output additional information related to the response content in addition to the information indicating the response content to the sound input from the user. In this case, the response generation unit 17 may control whether to output the additional information in accordance with the acquired information indicating the "degree of composure."

As a specific example, for a sound input "Show me how to get to Tokyo Station," it is assumed that a response for presenting "transfer information regarding how to get to Tokyo Station" is generated as the information indicating the response content and information for presenting "weather near Tokyo Station" is generated as additional information. At this time, the response generation unit 17 may output only "transfer information regarding how to get to Tokyo Station" indicating the response content when the user is in a hurried state. In addition, in addition to "transfer information regarding how to get to Tokyo Station" indicating the response content, when the user is calm, the response generation unit 17 may output "weather near Tokyo Station" which is the additional information to the output unit 40.

In addition, the response generation unit 17 may acquire another piece of information regarding the user in association with the user as additional information. As a specific example, when the user can inquire about "weather," the response generation unit 17 may output weather of a location (for example, an address) of a relative of the user to the output unit 40 as additional information in addition to weather of the vicinity of the user or a destination of the user. In addition, when information such as news is presented, the response generation unit 17 may output a link such as a URL of a site that supplies the information as additional information on the basis of a sound input from the user.

Also, for example, the above-described response component generation unit 12 can generate information (for example, a response component) for generating the additional information by newly executing a task on the basis of the executed task, the search key acquired from the sound input, the acquired response component, and the like. As a specific example, the response component generation unit 12 may separately acquire a response component indicating "weather near Tokyo Station" by executing a task for confirming the weather on the basis of information "Tokyo Station" used as the search key to acquire the response component indicating the transfer information.

In addition, the response generation unit 17 may control an amount of information of the response content to an inquiry from the user. As a specific example, the response generation unit 17 may switch a method of notifying of information among notification of only a title, notification of a summary, and notification of full text in accordance with an estimation result of the "degree of composure" when "confirmation of a received mail" or "confirmation of delivered news" is instructed to be executed by the user. In other words, the response generation unit 17 may control the degree of detail of the information of which the user is notified in accordance with the estimation result of the "degree of composure."

In addition, the response generation unit 17 may present the additional information in accordance with the speech state of the user regardless of whether there is an inquiry from the user. As a specific example, the response generation unit 17 is assumed to recognize that the user is calm after a route to a destination is presented in response to an inquiry from the user. In this case, the response generation unit 17 may present information regarding another spot (so-called detour information) along a route to the destination as additional information.

Also, when it is recognized that the user is in a hurried state, the response generation unit 17 may suppress presentation of the additional information or may dynamically switch between presence and absence of the presentation of the additional information in accordance with a change in the degree of composure of the user. In addition, it is needless to say that the response generation unit 17 may switch between presence and absence of the presentation of the additional information in accordance with various conditions. As a specific example, the response generation unit 17 may present the additional information in accordance with the degree of composure of the user when the user is away from home.

In addition, the response generation unit 17 may perform control such that information indicating the response content is output with different expressions in accordance with the acquired information indicating the "degree of composure."

As a specific example, when the user is calm, the response generation unit 17 is assumed to generate information indicating response content of natural language "The weather near Tokyo Station is nice" as information indicating "weather near Tokyo Station." Conversely, when the user is in a hurried state, the response generation unit 17 may generate information more plainly indicating the response content so that the information indicating "whether near Tokyo Station" is "clear."

In addition, the response generation unit 17 may control the output mode of the response in accordance with a recognized estimation result of the "age" of the user by acquiring information indicating the estimation result of the "age" of the user from the response component generation unit 12. Specifically, the response generation unit 17 may perform control such that an output speed of the response (for example, a speech speed of a sound output or an output speed of display information) is slowed when it is recognized that the user is older from the estimation result of the "age."

In addition, as the user ages, it may be difficult for the user to recognize a frequency band of a part of the acoustic signal output as the acoustic information. Therefore, the response generation unit 17 may control the frequency band of the sound signal (the acoustic signal) output as a response to the sound input in accordance with the estimation result of the "age" of the user.

In addition, the response generation unit 17 may estimate an environment in which a user speaks on the basis of positional information of the user and control the output mode of the response on the basis of the estimation result. As a specific example, the response generation unit 17 may improve sound quality of the acoustic information output as the response when the user is at home, and may temporarily lower the sound quality of the acoustic information to save battery power when the user is away from his or her home.

In addition, as another example, the response generation unit 17 may control the output mode of the response in accordance with a supply source of power for driving the information processing device 1 or a state of the supply source of the power. As a specific example, the response generation unit 17 may temporarily lower the sound quality of the acoustic information output as the response to save battery power when the information processing device 1 is driven on the basis of power from a battery. In addition, the response generation unit 17 may temporarily lower the sound quality of the acoustic information output as the response when a remaining amount of the battery power is less than a predetermined value.

Also, at least a part of the control (for example, a volume of the response, a speech speed of the response, and an amount of information to be output) of the output mode by the response generation unit 17 in accordance with information regarding the speech state of the user (that is, transitory information), as described above, may be switched to be valid or invalid on the basis of previous setting by the user. Of course, the validity and invalidity of each control of the above-described output mode may be selectively controlled on the basis of the previous setting by the user.

In addition, the above-described functional configuration is merely an example and the present disclosure is not necessarily limited to the same configuration. As a specific example, of the configuration of the control unit 10, a part of the configuration may be installed in a different external device from the information processing device 1. In addition, the type or shape of the information processing device 1 is not particularly limited as long as the above-described various functions can be realized. A function or a configuration may be added in accordance with the type or shape.

In addition, the type or use form of the information processing device 1 is not particularly limited either as long as the above-described functional configuration is realized. As a specific example, the information processing device 1 may be configured to be able to be carried by the user, such as a so-called smartphone, tablet terminal, and wearable terminal. In addition, the information processing device 1 may be configured as an information device such as a so-called personal computer or may be configured as any of various household electrical appliances such as a television receiver.

The example of the functional configuration of the information processing device 1 according to the embodiment has been described with reference to FIGS. 2 to 7.

### <3. Process>

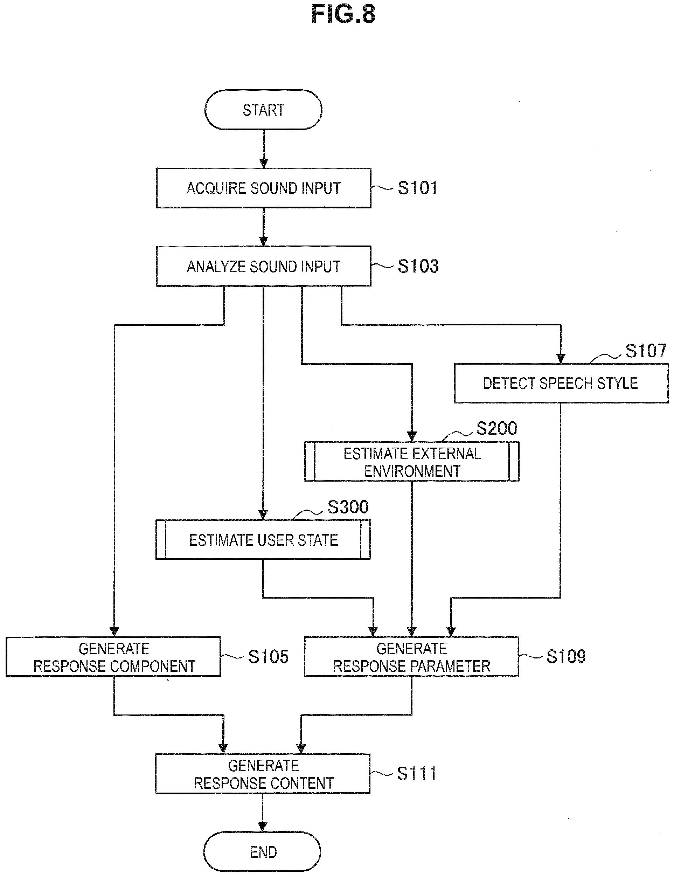

Next, an example of the flow of a series of operations of the information processing device 1 according to the embodiment will be described with reference to FIG. 8. FIG. 8 is a flowchart illustrating an example of the flow of the series of operations of the information processing device 1 according to the embodiment.

### (Step S101)

First, the acoustic information such as a so-called environmental sound such as background noise or the sound input from the user is acquired and the acquired acoustic information is output to the sound analysis unit 11 and the environmental sound analysis unit 13.

### (Step S103)

The sound section detection unit 111 of the sound analysis unit 11 acquires the collected acoustic information from the sound collection unit 21. The sound section detection unit 111 detects a sound section in the acoustic information by analyzing the acquired acoustic information. The sound section detection unit 111 extracts a portion (that is, an acoustic signal) corresponding to the sound section as the sound input from the acquired acoustic information. Then, the sound section detection unit 111 outputs the extracted sound input to the sound recognition unit 112 and the sound feature extraction unit 113.

The sound recognition unit 112 acquires the sound input included in the collected acoustic information from the sound section detection unit 111 and converts the sound input into text information by analyzing the acquired sound input on the basis of the sound recognition technology. Then, the sound recognition unit 112 outputs the text information obtained by converting the sound input to the sound feature extraction unit 113 and the meaning analysis unit 114.

The sound feature extraction unit 113 acquires the sound input included in the collected acoustic information from the sound section detection unit 111. In addition, the sound feature extraction unit 113 acquires the text information obtained by converting the sound input on the basis of the sound recognition technology from the sound recognition unit 112.

The sound feature extraction unit 113 detects the magnitude of the sound (that is, the volume of the sound input), for example, on the basis of the amplitude of the sound signal by analyzing the sound signal acquired as the sound input. Then, the sound feature extraction unit 113 outputs the information indicating the detected magnitude of the sound to the external environment estimation unit 132 of the environmental sound analysis unit 13.

In addition, the sound feature extraction unit 113 calculates a speech speed on the basis of the length of the acquired sound input (that is, the length of the speech section) and the length of the text information (for example, the number of letters) obtained by converting the sound input. Then, the sound feature extraction unit 113 outputs the information indicating the calculated speech speed to the user state estimation unit 15.

The meaning analysis unit 114 acquires the text information obtained by converting the sound input on the basis of the sound recognition technology from the sound recognition unit 112. The meaning analysis unit 114 recognizes the meaning content (in other words, meaning content indicated by the sound input) indicated by the text information by executing the natural language processing on the acquired text information (that is, the text information obtained by converting the sound input).

In addition, the meaning analysis unit 114 specifies the task to be executed and the argument for executing the task in accordance with a result of the analysis based on the natural language processing technology (hereinafter simply referred to as a "result of the natural language processing" in some cases) on the acquired text information.

For example, when the text information "Check my schedule for tomorrow at 1 pm" is acquired, the meaning analysis unit 114 recognizes that the task of "schedule conformation" is instructed to be executed by the user on the basis of the keywords "schedule" and "check" included in the text information. Also, the meaning analysis unit 114 extracts the keyword "tomorrow at 1 pm" as an argument indicating a date and time necessary to execute the task of "schedule confirmation" from the acquired text information. Also, at this time, the meaning analysis unit 114 may convert corresponding words such as "tomorrow," "today," and "day after tomorrow" of which meanings may not be specified uniquely into information indicating actual dates such as "10/1."

Then, the meaning analysis unit 114 outputs the information indicating the specified task to be executed and the argument necessary to execute the task to the response component generation unit 12 to be described below. In addition, the meaning analysis unit 114 outputs a result of the natural language processing on the text information obtained by converting the sound input (for example, a result of vocabulary analysis (morphological analysis), syntax analysis, and meaning analysis) to the speech style detection unit 115.

### (Step S105)

The response component generation unit 12 acquires the information indicating the task to be executed which is specified on the basis of the result of the natural language processing on the text information obtained by converting the sound input and the argument necessary to execute the task from the meaning analysis unit 114. The response component generation unit 12 executes the task indicated by the information acquired from the meaning analysis unit 114 using the argument acquired together as the input information and acquires the information necessary to generate the response for the user as the execution result of the task.

For example, to execute the task of "schedule confirmation," the response component generation unit 12 causes an application for managing a schedule to search for a schedule corresponding to a search key using "13:00 10/1/2014" designated as the argument as the search key. Then, the response component generation unit 12 acquires the search result of the schedule corresponding to the search key from the application. For example, the response component generation unit 12 acquires the information "Meeting in room A" registered as "title" and the information "Taro Yamada" registered as "participant" as the search result of the schedule.

Then, the response component generation unit 12 outputs information indicating a response component and information indicating the executed task using the information acquired as the search result as the response component for generating the response to the sound input from the user to the response generation unit 17 to be described below.

### (Step S 107)

The speech style detection unit 115 acquires the result of the natural language processing on the text information obtained by converting the sound input from the meaning analysis unit 114. On the basis of the acquired result of the natural language processing, the speech style detection unit 115 extracts phrases of which expressions to be used are different in some cases (that is, unique expressions) from the text information obtained by converting the sound input in accordance with a change in a user or a situation.

Then, on the basis of the result of the natural language processing on the text information obtained by converting the sound input, the speech style detection unit 115 outputs the unique expressions extracted from the text information as information indicating a speech style to the response parameter generation unit 16 to be described below.

### (Step S200)

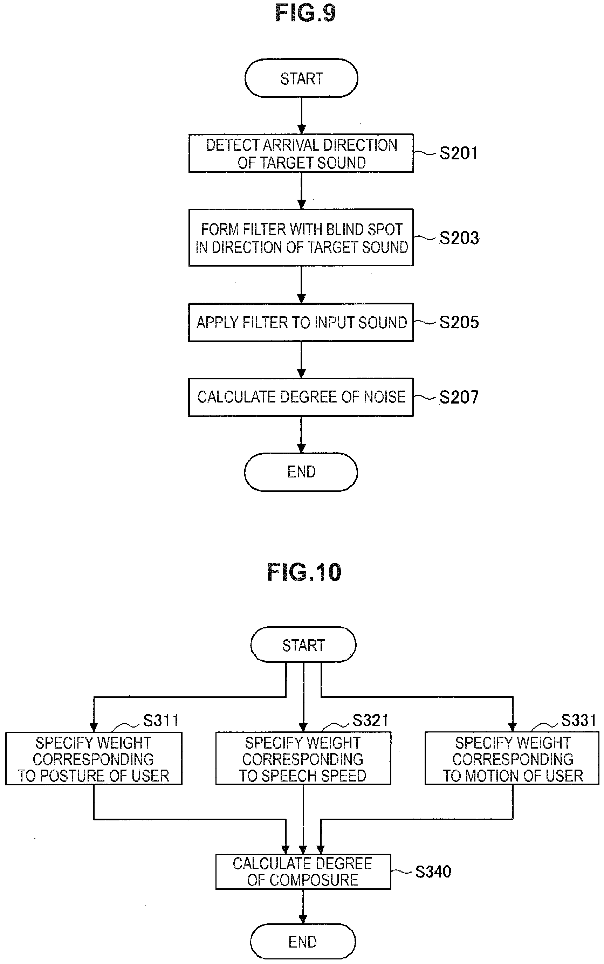

The environmental sound analysis unit 13 extracts an environmental sound in a surrounding environment by analyzing the acquired acoustic information and extracts features of the environmental sound. For example, the environmental sound analysis unit 13 extracts the "degree of noise" as the features of the environmental sound on the basis of the volumes of the sound input and the environmental sound. FIG. 9 is a flowchart illustrating an example of an operation of the information processing device 1. FIG. 9 illustrates an example of a process when the information processing device 1 extracts the "degree of noise" as the feature of the environmental sound.

### (Step S201)

The environmental sound recognition unit 131 of the environmental analysis unit 13 acquires the collected acoustic information from the sound collection unit 21. For example, the environmental sound recognition unit 131 detects a direction in which the user is located with respect to the information processing device 1 (that is, an arrival direction of a target sound). Also, the detection method is not particularly limited as long as the direction in which the user is located with respect to the information processing device 1 can be detected. As a specific example, the environmental sound recognition unit 131 may detect a direction in which the user is located with respect to the information processing device 1 on the basis of the position of the user in an image acquired as the analysis result of the image captured by the imaging unit 23. In addition, as another example, the information processing device 1 may be configured such that an arrival direction of the collected acoustic information is estimated in accordance with a collection result of each sound collection device when the plurality of sound collection devices (for example, a microphone array) are provided as the sound collection unit 21.

### (Steps S203 and S205)

Subsequently, the environmental sound recognition unit 131 forms a filter with a blind spot (null beam) in the direction in which the user is located with respect to the information processing device 1 (step S203). Then, the environmental sound recognition unit 131 extracts another piece of acoustic information other than the sound input from the user as the environmental sound from the acoustic information by applying the formed filter to the acoustic information collected by the sound collection unit 21 (step S205).

### (Step S207)

Subsequently, the environmental sound recognition unit 131 detects a volume of the environmental sound on the basis of, for example, the amplitude of the acoustic signal by analyzing the acoustic signal of the environmental sound extracted from the acoustic information. Then, the environmental sound recognition unit 131 outputs the information indicating the detected volume of the environmental sound as the information indicating the volume of noise to the external environment estimation unit 132.

The external environment estimation unit 132 acquires the information indicating the volume of noise from the environmental sound recognition unit 131. In addition, the external environment estimation unit 132 acquires the information indicating the magnitude of a sound (that is, the volume of the sound input) from the sound feature extraction unit 113 of the sound analysis unit 11. Then, the external environment estimation unit 132 calculates, as the degree of noise, a numerical value (for example, an SN ratio) indicating the magnitude of the volume of noise with respect to the volume of a target sound (that is, the magnitude of the sound) when the sound input from the user is set as the target sound. The external environment estimation unit 132 outputs information indicating the calculated degree of noise to the response parameter generation unit 16 to be described below.

The example of the flow of the series of processes when the environmental sound analysis unit 13 extracts the "degree of noise" as the feature of the environmental sound has been described above with reference to FIG. 9.

### (Step S300)

In addition, as illustrated in FIG. 8, the information processing device 1 estimates various states of the user on the basis of various kinds of acquired information such as a sound input from the user and a captured image of the user. Accordingly, an example of an operation when the information processing device 1 estimates the "degree of composure" of the user on the basis of acquired various kinds of information will be described below with reference to FIG. 10. FIG. 10 is a flowchart illustrating an example of an operation of the information processing device 1. FIG. 10 illustrates an example of a process when the information processing device 1 estimates the "degree of composure" as a user state.

### (Step S311)

For example, the image analysis unit 14 estimates information (for example, attribute information) regarding the user and the user state, such as a posture, an age, and a sex of the user on the basis of the result of the image analysis by executing an image analysis on the captured image. In addition, the image analysis unit 14 may individually recognize the user captured in the image by executing an analysis process based on a so-called individual recognition technology on the captured image. Then, the image analysis unit 14 outputs an analysis result of the acquired image, that is, a recognition result of the individual user captured in the image or a result of the estimation of the information regarding the user state or the user, such as the posture, the age, and the sex, to the user state estimation unit 15 to be described.

The user state estimation unit 15 acquires an estimation result of the information regarding the user or the user state based on the analysis result of the captured image from the image analysis unit 14 and specifies a weight (that is, an addition or subtraction value) for calculating the "degree of composure" of the user on the basis of the acquired estimation result (for example, an estimation result of the posture of the user).

As a specific example, as illustrated in Fig. 4, the user state estimation unit 15 specifies a weight as an addition value of the degree of composure so that it is easy to recognize that the user is calm when the posture of the user is a "sitting" state or a "lying" state. In addition, the user state estimation unit 15 specifies a subtraction value of the degree of composure as a weight value so that it is easy to recognize that the user is in a hurried state when the posture of the user is a "standing" state.

### (Step S321)

In addition, the user state estimation unit 15 may acquire the information indicating the speech speed of the sound input recognized on the basis of the analysis result of the sound input from the sound feature extraction unit 113 and specify a weight (that is, an addition or subtraction value) for calculating the "degree of composure" of the user on the basis of the acquired information indicating the speech speed.

As a specific example, as illustrated in FIG. 5, the user state estimation unit 15 specifies a weight as an addition value of the degree of composure so that it is easy to recognize that the user is calm when a speech speed of "4 to 6 letters/second" is used as a standard value of a speech speed and a speech speed is slower than the standard value (that is, the speech speed is "less than 4 letters/second"). In addition, the user state estimation unit 15 specifies a weight as a subtraction value of the degree of composure so that it is easy to recognize that the user is in a hurried state when a speech speed is faster the standard value (that is, the speech speed is "7 or more letters/second").

### (Step S331)

In addition, the user state estimation unit 15 may specify a weight (that is, an addition or subtraction value) for calculating the "degree of composure" of the user on the basis of the estimation result of the behavior of the user in accordance with detection results or the like of various sensors.

As a specific example, as illustrated in FIG. 6, the user state estimation unit 15 specifies a weight as an addition value of the degree of composure so that it is easy to recognize that the user is calm when the user is "stopped." In addition, the user state estimation unit 15 specifies a subtraction value of the degree of composure as a weight so that it is easy to recognize that the user is in a hurried state when the user is "walking" or "running."

### (Step S340)

In this way, the user state estimation unit 15 specifies a weight (that is, an addition or subtraction value) for calculating the "degree of composure" on the basis of, for example, at least some of the recognized information among the "posture of the user," the "speech speed of the sound input," and the "behavior of the user." Then, the user state estimation unit 15 calculates the degree of composure of the user by applying the specified weight to a preset initial value of the degree of composure.

Then, the user state estimation unit 15 outputs information indicating the estimated user state (for example, the degree of composure) to the response parameter generation unit 16. Also, at this time, the user state estimation unit 15 may output the information regarding the user, such as an estimation result of the "age or sex of the user" or a "recognition result of the individual user," to the response parameter generation unit 16.

The example of the operation when the information processing device 1 estimates the "degree of composure" of the user on the basis of the various kinds of acquired information has been described above with reference to FIG. 10.

### (Step S 109)

Subsequently, as illustrated in FIG. 8, the response parameter generation unit 16 generates a response parameter on the basis of the information regarding the detected user state, situation, or characteristics (for example, language characteristics), such as a detection result of an external environment of the user, information indicating the user state, and a speech style of the user.

Also, the acquired "information regarding the speech state of the user" includes transitory information which varies in accordance with every situation, such as the "detection result of the external environment of the user" or the "user state," and continuous information indicating characteristics of the user such as a "speech style of the user."

Therefore, the response parameter generation unit 16 may accumulate a response parameter based on the continuous information indicating the characteristics of the user, such as the "speech style of the user," in the acquired "information regarding the speech state of the user" in the storage unit 30.

### (Step S111)

The response generation unit 17 acquires the information indicating the response component for generating a response to the sound input from the user and the information indicating the task executed to acquire the response component from the response component generation unit 12.

The response generation unit 17 transmits the acquired information indicating the response component to the response parameter generation unit 16 and acquires information indicating the name of the response component from the response parameter generation unit 16 in accordance with the speech style of the user.

Subsequently, the response generation unit 17 recognizes content of an inquiry from the user based on the sound input on the basis of the acquired information indicating the task. As a specific example, in the case of the example illustrated in FIG. 3, on the basis of the acquired information indicating the task, the response generation unit 17 recognizes that the task for "schedule confirmation" is executed in regard to the sound input "Check my schedule for tomorrow at 1 pm" from the user.

Then, the response generation unit 17 generates information (for example, text information) indicating response content on the basis of the recognition result of the executed task and the name in accordance with the speech style of the user corresponding to the response component.

Specifically, when it is recognized that the task for "schedule confirmation" is executed on the basis of the acquired information indicating the task, the response generation unit 17 generates a form of a response for presenting the result of "schedule confirmation" to the user. Then, in regard to the generated form, the response generation unit 17 generates information indicating the response content by embedding a name in accordance with the speech style of the user corresponding to the response component in the generated form.

When the information indicating the response content is generated, the response generation unit 17 causes the output unit 40 to output the information indicating the response content. At this time, the response generation unit 17 may generate a sound signal vocalizing the response content on the basis of, for example, a sound combination technology from the text information indicating the response content and cause the output unit 40 to output the sound signal. In addition, the response generation unit 17 may cause the output unit 40 to output the text information indicating the response content as display information.

In addition, at this time, the response generation unit 17 may acquire information regarding a speech state of the user (that is, transitory information) at the time of a dialog between the user and the information processing device 1, such as the "degree of noise" of a surrounding environment of the user or the "degree of composure" of the user from the response component generation unit 12. In this case, the response generation unit 17 may control an output mode of the response in accordance with the acquired information.

The example of the flow of the series of operations of the information processing device 1 according to the embodiment has been described with reference to FIGS. 8 to 10.

### <4. Modification examples>

Next, modification examples of the information processing device 1 according to the embodiment will be described.

### [4.1. First modification example: feedback of various recognized states]

First, the information processing device 1 according to a first modification example will be described. The information processing device 1 according to the first modification example feeds information back to a user in accordance with estimation results of various states (in other words, information regarding a speech state of the user), such as the "degree of noise" or the "degree of composure," acquired to generate a response to the sound input.

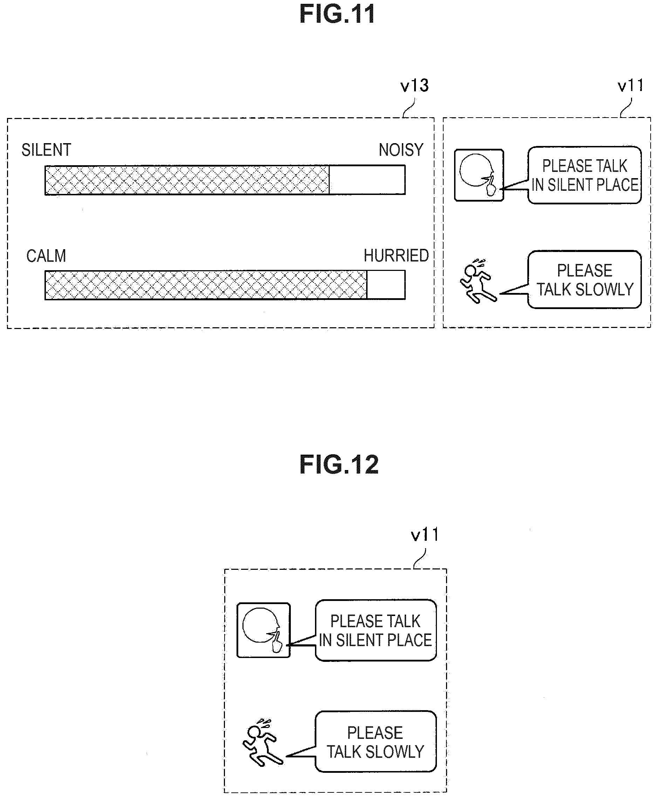

For example, FIGS. 11 and 12 are explanatory diagrams illustrating an overview of the information processing device 1 according to the first modification example. FIGS. 11 and 12 illustrate an example of a display screen on which the information processing device 1 feeds information in accordance with an estimation result of the "degree of noise" or the "degree of composure" as display information back to the user.

For example, in the example illustrated in FIG. 11, the information processing device 1 may present information indicating advice for further improving recognition precision of a sound input in accordance with an estimation result of the "degree of noise" or the "degree of composure," as denoted by reference numeral v11. In addition, as denoted by reference numeral v13, the information processing device 1 may present display information visualizing the estimation result of the "degree of noise" or the "degree of composure" to the user.

In this way, by feeding the information in accordance with the estimation result of the "degree of noise" or the "degree of composure" back to the user, the user can recognize a cause for not accurately recognizing the sound input on the basis of the feedback when the user may not accurately recognize the sound input.

Also, content of the information fed back to the user by the information processing device 1 or the feedback method is not particularly limited. For example, FIG. 12 illustrates an example of a display screen when the information processing device 1 in which a screen for displaying information is relatively small like a smartphone or a wearable terminal feeds information back to the user. In the example illustrated in FIG. 12, only the information v11 indicating the advice for further improving the recognition precision of the sound input among various kinds of information denoted by reference numerals v11 and v13 in FIG. 11 is presented. In addition, the information processing device 1 may present only an icon indicating a level of the "degree of noise" or the "degree of composure" to the user when a screen for display information is considerably small.

In addition, the information processing device 1 may control content of information fed back to the user or a mode of the feedback in accordance with the estimation result of the "degree of noise" or the "degree of composure." As a specific example, the information processing device 1 may feed the information v11 and v13 illustrated in FIG. 12 back when the user is calm, and may feed only the information v11 back when the user is in a hurried state, as illustrated in FIG. 12. In addition, when it is recognized that the user is in a very hurried state, the information processing device 1 may feed only an icon indicating a level of the "degree of noise" or the "degree of composure" back to the user.

In addition, the information processing device 1 may present the information in accordance with the estimation result of the "degree of noise" or the "degree of composure" back to the user in a different mode from the display information. As a specific example, when a display unit is not included as in a headphone type terminal, the information processing device 1 may feed the information in accordance with the estimation result of the "degree of noise" or the "degree of composure" as acoustic information back to the user.

The information processing device 1 according to the first modification example has been described above with reference to FIGS. 11 and 12.

### [4.2. Second modification example: control example of response content according to individual recognition result and situation]

Next, an example of a case in which the information processing device 1 controls response content in accordance with a recognition result of an individual user and a recognition result of a situation in which the user is placed will be described according to a second modification example.

For example, the user Ua who is a speaker switches and uses the name of another user Ub in accordance with a situation in which the user Ua is placed in some cases. As a specific example, the users Ua and Ub are a married couple, there is a child between the two persons, and the name of the user Ub is "Yuri." In this case, for example, a case in which the user Ua calls the user Ub "Mama" in a situation in which a child is present, and the user Ua calls the user Ub the name "Yuri" in a situation in which the child is not present can be assumed.

The information processing device 1 may reproduce the switch between the names (that is, a speech style) in accordance with such situations in accordance with a situation in which a response is made.

As a specific example, it is assumed that the name of the user Ua is "Hirofumi," the name of the user Ub who is the wife of the user Ua is "Yuri," and the name of a user Uc who is the child of the users Ua and Ub is "Yuta."

In this case, for example, the information processing device 1 detects users near the self-information processing device by analyzing an image captured by the imaging unit 23 and recognizes each of the detected individual users. Then, the information processing device 1 switches between the names of the users Ua, Ub, and Uc on the basis of a result of individual recognition.

For example, the information processing device 1 may generate a response so that the users Ua and Ub call each other "Hirofumi" and "Yuri" when the information processing device 1 recognizes that only the users Ua and Ub are near the self-information processing device 1 and the user Uc who is the child of the users Ua and Ub is not present. In addition, when the information processing device 1 recognizes that the user Uc is near the self-information processing device 1, the information processing device 1 may generate a response so that the users Ua, Ub, and Uc call each other "Papa," "Mama," and "Yuta."

Also, when the information processing device 1 performs such control, a response parameter indicating a speech style of each user may be distinguished and accumulated for each of the assumed situations.

Of course, the foregoing example is merely an example. A situation in which the information processing device 1 switches the speech style or a switch target speech style is not limited to the foregoing example.

For example, the response generation unit 17 may switch an expression of information indication a greeting among "good morning," "good afternoon," and "good evening" in information output as response content in accordance with a period of time in which the sound input from the user is acquired.

In addition, as another example, the response generation unit 17 controls response content so that the response content is a softer expression when only predetermined people related to the user (for example, family members) are present. The response generation unit 17 may control the response content so that the response content becomes a more formal expression when a third person is present.

The example of the case in which the information processing device 1 controls the response content in accordance with the recognition result of the individual user and the recognition result of the situation of the user has been described above as the second modification example.

### <5. Example>

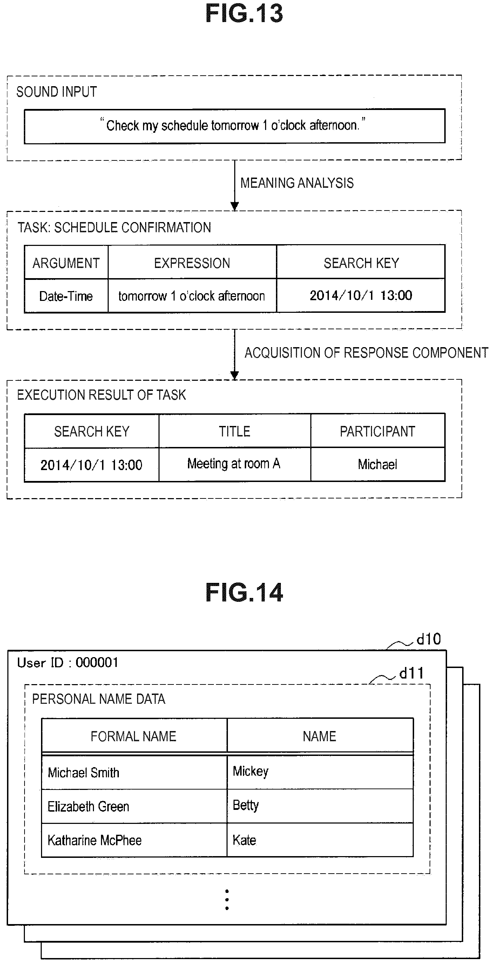

In the above-described embodiment, the case in which "Japanese" is used as a language for a dialog between the information processing device 1 and the users has been exemplified. However, it is needless to say that the language to be used is not necessarily limited to "Japanese." Accordingly, an example of a case in which "English" is used as the language for a dialog between the information processing device 1 and users will be described below with reference to FIGS. 13 to 16. FIGS. 13 to 16 are explanatory diagrams illustrating an example of the information processing device 1 according to the embodiment. FIGS. 13 to 16 illustrate an example of a case in which "English" is used as a language for a dialog between the information processing device 1 and a user. Also, in the description, differences from the case in which "Japanese" is a language to be used will be mainly focused on and detailed description of other features will be omitted.

For example, FIG. 13 is an explanatory diagram illustrating an example of a process based on analysis of meaning content indicated by an English sound input and a result of the analysis when the information processing device 1 according to the example acquires the sound input.

FIG. 13 illustrates a case in which the user says "Check my schedule tomorrow 1 o'clock afternoon." to confirm his or her schedule. That is, in the case of the example illustrated in FIG. 13, the information processing device 1 acquires text information "Check my schedule tomorrow 1 o'clock afternoon." as a result of sound recognition in regard to the acquired sound input.

The information processing device 1 specifies a task "schedule confirmation" as a task to be executed on the basis of the text information (that is, a task for generating a response to an inquiry from the user) by executing the analysis based on the natural language processing technology on the acquired text information "Check my schedule tomorrow 1 o'clock afternoon."

Also, it is needless to say that a process corresponding to the English language may be applied as the sound recognition of the sound input or natural language processing on the result of the sound recognition when an English sound input is acquired. In addition, as the natural language processing on an English natural sentence or the sound recognition in regard to the English sound input, a generally used scheme may be applied. In the description, the detailed description of the process will be omitted.

In addition, when the task to be executed on the basis of an instruction from the user is specified, the information processing device 1 extracts an argument necessary to execute the specified task from the acquired text information "Check my schedule tomorrow 1 o'clock afternoon." Specifically, the information processing device 1 extracts the keywords "tomorrow 1 o'clock afternoon" as an argument indicating "Date-Time" necessary to execute the task of "schedule confirmation" from a result of morphological analysis on the acquired text information "Check my schedule tomorrow 1 o'clock afternoon." In addition, at this time, the information processing device 1 may convert the keyword "tomorrow 1 o'clock afternoon" into an expression "2014/10/1 13:00."

Subsequently, the information processing device 1 acquires a response component for generating a response to the sound input by executing the specified task on the basis of the specified argument. For example, in the case of the example illustrated in FIG. 13, the information processing device 1 causes an application for managing a schedule to search for a schedule corresponding to a search key using "2014/10/1 13:00" designated as the argument as the search key. Then, the information processing device 1 acquires information "Meeting at room A" registered as "title" and information "Michael" registered as "participant" as the search result of the schedule.

In addition, FIG. 14 is an explanatory diagram illustrating an example of a response parameter stored as continuous information. FIG. 14 illustrates an example of the response parameter based on the "speech style of the user" when "English" is used. Also, FIG. 14 illustrates an example of personal name data d11 included in a response parameter d10 indicating the "speech style of the user."

For example, in the example illustrated in FIG. 14, a name "Mickey" is associated with a normal name "Michael Smith." That is, the data indicates that a corresponding user calls a person with the name "Michael Smith" "Mickey." Similarly, a name "Betty" is associated with a normal name "Elizabeth Green." In addition, a name "Kate" is associated with a normal name "Katharine McPhee."

Of course, the example illustrated in FIG. 14 is merely an example and the present disclosure is not necessarily limited to the content illustrated in FIG. 14. As a specific example, when the corresponding user calls a certain person adding an honorific title such as "Mr." or "Doctor," the name with the honorific title is associated with the normal name of the person.

Also, the subsequent operation is the same as that of the information processing device 1 according to the above-described embodiment. That is, the information processing device 1 acquires the name of a response component acquired as an execution result of the task as the response parameter and generates information indicating the response content by embedding the acquired response parameter in a form of the response content in accordance with the executed task. Then, the information processing device 1 causes the output unit 40 to output the information indicating the response content.

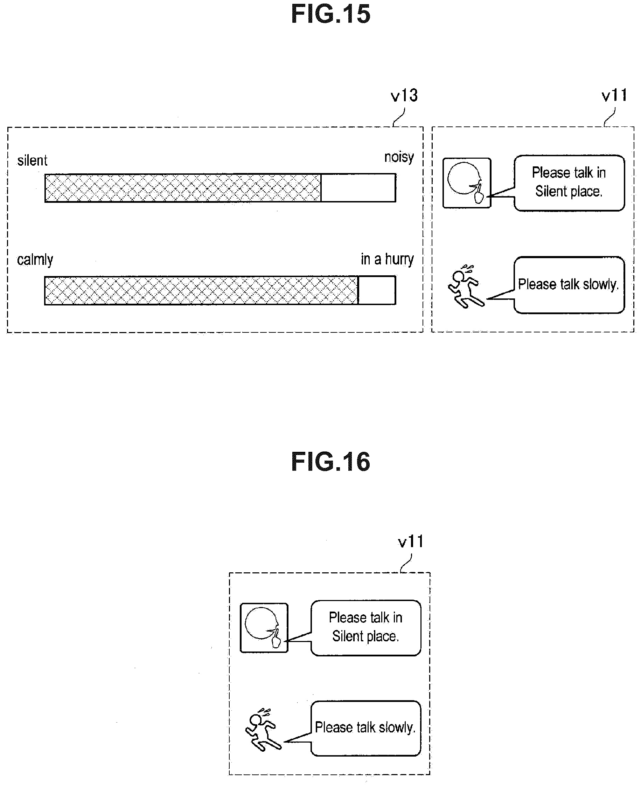

Also, the information processing device 1 according to the example may feed information back to the user in accordance with estimation results of various states (in other words, information regarding the speech state of the user) such as the "degree of noise" or the "degree of composure," as in the information processing device 1 according to the above-described first modification example. For example, FIGS. 15 and 16 are explanatory diagrams illustrating an overview of the information processing device 1 according to the example. FIGS. 15 and 16 illustrate examples of a display screen on which the information processing device 1 feeds the information in accordance with the estimation result of the "degree of noise" or the "degree of composure" as display information back to the user.

The case in which "English" is used as the language for a dialog between the information processing device 1 and the user has been exemplified with reference to FIGS. 13 to 16.

### <6. Hardware configuration>

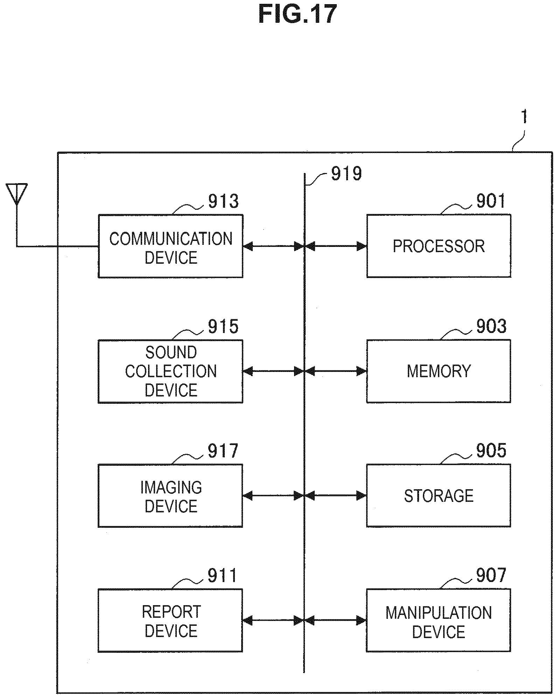

Next, an example of a hardware configuration of the information processing device 1 according to each embodiment of the present disclosure will be described with reference to FIG. 17. FIG. 17 is a diagram illustrating an example of the hardware configuration of the information processing device 1 according to the embodiment.

As illustrated in FIG. 17, the information processing device 1 according to the embodiment includes a processor 901, a memory 903, a storage 905, a manipulation device 907, a report device 911, a sound collection device 915, an imaging device 917, and a bus 919. In addition, the information processing device 1 may also include a communication device 913.

The processor 901 may be, for example, a central processing unit (CPU), a graphics processing unit (GPU), a digital signal processor (DSP), or a system on chip (SoC) and executes various processes of the information processing device 1. The processor 901 can be configured by, for example, an electronic circuit that executes various calculation processes. Also, each configuration of the above-described control unit 10 can be realized by the processor 901.

The memory 903 includes a random access memory (RAM) and a read-only memory (ROM) and stores data and a program to be executed by the processor 901. The storage 905 can include a storage medium such as a semiconductor memory or a hard disk. For example, the above-described storage unit 30 can be realized by at least one of the memory 903 and the storage 905 or a combination of both the memory 903 and the storage 905.

The manipulation device 907 has a function of generating an input signal used for the user to execute a desired manipulation. The manipulation device 907 can be configured as, for example, a touch panel. In addition, as another example, the manipulation device 907 may be configured to include an input unit such as a button and a switch that allows the user to input information and an input control circuit that generates an input signal on the basis of an input by the user and supplies the input signal to the processor 901.

The report device 911 is an example of an output device and may be, for example, a device such as a liquid crystal display (LCD) device, or an organic EL (organic light emitting diode (OLED)) display. In this case, the report device 911 can report predetermined information to the user by displaying a screen. In addition, the report device 911 may be a device such as a speaker that reports predetermined information to the user by outputting a predetermined acoustic signal. Also, the above-described output unit 40 can be realized by the report device 911.

The foregoing example of the report device 911 is merely an example. The aspect of the report device 911 is not particularly limited as long as predetermined information can be reported to the user. As a specific example, the report device 911 may be a device such as a light emitting diode (LED) that reports predetermined information to the user by a flickering pattern. In addition, the report device 911 may be a device such as a vibrator that vibrates to report predetermined information to the user.

The communication device 913 is communication means included in the information processing device 1 and communicates with an external device via a network. The communication device 913 is a wired or wireless communication interface. When the communication device 913 is configured as a wireless communication interface, the communication device 913 may include a communication antenna, a radio frequency (RF) circuit, and a baseband processor.

The communication device 913 has a function of executing various signal processes on a signal received from an external device and can supply a digital signal generated from a received analog signal to the processor 901.

The sound collection device 915 is a device such as a microphone that collects a sound arriving from the user and a surrounding environment acoustic sound and acquires acoustic information (an acoustic signal). In addition, the sound collection device 915 may acquire data indicating an analog acoustic signal indicating the collected sound or acoustic sound or may convert the analog acoustic signal into a digital acoustic signal to acquire data indicating the converted digital acoustic signal as acoustic information. Also, the above-described sound collection unit 21 can be realized by the sound collection device 915.

The imaging device 917 includes an image sensor such as a complementary metal-oxide semiconductor (CMOS) image sensor or a charge coupled device (CCD) image sensor that images a subject to obtain digital data of the captured image. That is, the imaging device 917 has a function of capturing a still image or a moving image via an optical system such as a lens under the control of the processor 901. The imaging device 917 may store the captured image in the memory 903 or the storage 905. Also, the above-described imaging unit 23 can be realized by the imaging device 917.

The bus 919 connects the processor 901, the memory 903, the storage 905, the manipulation device 907, the display device 909, the communication device 913, the sound collection device 915, and the imaging device 917 to each other. The bus 919 may include a plurality of kinds of buses.

In addition, it is also possible to generate a program causing hardware such as a processor, a memory, and a storage contained in a computer to execute the same function as the configuration of the foregoing information processing device 1. In addition, it is possible to provide a computer-readable storage medium that records the program.

### <7. Conclusion>

As described above, the information processing device 1 according to the embodiment generates the response parameter on the basis of the information (that is, the information regarding the speech state of the user) regarding the detected user state, situation, or characteristics (for example, language characteristics), such as a detection result of an external environment of the user, information indicating the user state, and a speech style of the user. Then, the information processing device 1 controls the content (for example, the name of a unique expression or an amount of information to be output) of the response to the sound input from the user or the output mode of the response (for example, a volume, an output speed (speech speed), and a frequency band) on the basis of the generated response parameter.

Thus, the information processing device 1 according to the embodiment can control the response to the sound input so that a more preferred mode, in other words, a mode that gives the user a more natural (that is, less uncomfortable) feeling, is realized in accordance with a change in a user or a situation. That is, the information processing device 1 according to the embodiment can provide an interactive user interface based on the sound input in which a dialog with the user can be realized in a more natural mode.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   a control unit configured to control output of a response to speech of a user in accordance with acquired information regarding a speech state of the user.
(2) The information processing device according to (1),
   in which the control unit controls content output as the response in accordance with the acquired information regarding the speech state of the user.
(3) The information processing device according to (2),
   in which the control unit controls a type of information output as the content in accordance with information regarding the speech state of the user.
(4) The information processing device according to (2) or (3),
   in which the control unit performs control such that a predetermined type of information included in the content output as the response is output with an expression corresponding to the acquired information regarding the speech state of the user.
(5) The information processing device according to any one of (2) to (4),
   in which the control unit controls an amount of information of the content output as the response in accordance with the acquired information regarding the speech state of the user.
(6) The information processing device according to (5),
   in which the control unit controls a degree of detail of the content output as the response in accordance with the acquired information regarding the speech state of the user.
(7) The information processing device according to (5),
   in which the control unit controls output of additional information regarding a response to an inquiry spoken by the user in accordance with the acquired information regarding the speech state of the user.
(8) The information processing device according to any one of (1) to (7),
   in which the control unit controls an output mode of the response in accordance with the acquired information regarding the speech state of the user.
(9) The information processing device according to (8),
   in which the control unit controls a volume of sound information output as the response in accordance with the acquired information regarding the speech state of the user.
(10) The information processing device according to (8) or (9),
   in which the control unit controls an output speed of the response in accordance with the acquired information regarding the speech state of the user.
(11) The information processing device according to any one of (8) to (10),
   in which the control unit controls a frequency band of sound information output as the response in accordance with the acquired information regarding the speech state of the user.
(12) The information processing device according to any one of (1) to (8),
   in which at least one state recognized on the basis of a detection result of at least one detection unit is associated with at least some of the acquired information regarding the speech state of the user, and
   in a case where information indicating the state recognized on the basis of the detection result of the at least one detection unit is acquired, the control unit performs control such that the response is output in accordance with information regarding the speech state of the user associated with the state.
(13) The information processing device according to any one of (1) to (12),
   in which the control unit individually recognizes the user in accordance with at least some of the acquired information regarding the speech state of the user and performs control such that the response is output in accordance with a result of the individual recognition.
(14) The information processing device according to (13),
   in which the control unit performs control such that the response is output in accordance with the result of the individual recognition and some of the acquired information regarding the speech state of the user.
(15) The information processing device according to any one of (1) to (14),
   in which the information regarding the speech state of the user includes previously acquired information based on the speech of the user.
(16) The information processing device according to any one of (1) to (15),
   in which the information regarding the speech state of the user includes information indicating a recognized behavior of the user.
(17) The information processing device according to any one of (1) to (16),
   in which the information regarding the speech state of the user includes information indicating a recognized surrounding environment of the user.
(18) The information processing device according to any one of (1) to (17),
   in which at least some of the information regarding the speech state of the user is acquired on the basis of the speech of the user.
(19) An information processing method including:
   controlling, by a processor, output of a response to speech of a user in accordance with acquired information regarding a speech state of the user.
(20) A program causing a computer to execute:
   controlling output of a response to speech of a user in accordance with acquired information regarding a speech state of the user.

### Reference Signs List

- 1: information processing device
- 10: control unit
- 11: sound analysis unit
- 111: sound section detection unit
- 112: sound recognition unit
- 113: sound feature extraction unit
- 114: meaning analysis unit
- 115: speech style detection unit
- 12: response component generation unit
- 13: environmental sound analysis unit
- 14: image analysis unit
- 131: environmental sound recognition unit
- 132: external environment estimation unit
- 15: user state estimation unit
- 16: response parameter generation unit
- 17: response generation unit
- 21: sound collection unit
- 23: imaging unit
- 30: storage unit
- 40: output unit

## Claims

1. An information processing device comprising:
a control unit configured to control output of a response to speech of a user in accordance with acquired information regarding a speech state of the user.

2. The information processing device according to claim 1,
wherein the control unit controls content output as the response in accordance with the acquired information regarding the speech state of the user.

3. The information processing device according to claim 2,
wherein the control unit controls a type of information output as the content in accordance with information regarding the speech state of the user.

4. The information processing device according to claim 2,
wherein the control unit performs control such that a predetermined type of information included in the content output as the response is output with an expression corresponding to the acquired information regarding the speech state of the user.

5. The information processing device according to claim 2,
wherein the control unit controls an amount of information of the content output as the response in accordance with the acquired information regarding the speech state of the user.

6. The information processing device according to claim 5,
wherein the control unit controls a degree of detail of the content output as the response in accordance with the acquired information regarding the speech state of the user.

7. The information processing device according to claim 5,
wherein the control unit controls output of additional information regarding a response to an inquiry spoken by the user in accordance with the acquired information regarding the speech state of the user.

8. The information processing device according to claim 1,
wherein the control unit controls an output mode of the response in accordance with the acquired information regarding the speech state of the user.

9. The information processing device according to claim 8,
wherein the control unit controls a volume of sound information output as the response in accordance with the acquired information regarding the speech state of the user.

10. The information processing device according to claim 8,
wherein the control unit controls an output speed of the response in accordance with the acquired information regarding the speech state of the user.

11. The information processing device according to claim 8,
wherein the control unit controls a frequency band of sound information output as the response in accordance with the acquired information regarding the speech state of the user.

12. The information processing device according to claim 1,
wherein at least one state recognized on the basis of a detection result of at least one detection unit is associated with at least some of the acquired information regarding the speech state of the user, and
in a case where information indicating the state recognized on the basis of the detection result of the at least one detection unit is acquired, the control unit performs control such that the response is output in accordance with information regarding the speech state of the user associated with the state.

13. The information processing device according to claim 1,
wherein the control unit individually recognizes the user in accordance with at least some of the acquired information regarding the speech state of the user and performs control such that the response is output in accordance with a result of the individual recognition.

14. The information processing device according to claim 13,
wherein the control unit performs control such that the response is output in accordance with the result of the individual recognition and some of the acquired information regarding the speech state of the user.

15. The information processing device according to claim 1,
wherein the information regarding the speech state of the user includes previously acquired information based on the speech of the user.

16. The information processing device according to claim 1,
wherein the information regarding the speech state of the user includes information indicating a recognized behavior of the user.

17. The information processing device according to claim 1,
wherein the information regarding the speech state of the user includes information indicating a recognized surrounding environment of the user.

18. The information processing device according to claim 1,
wherein at least some of the information regarding the speech state of the user is acquired on the basis of the speech of the user.

19. An information processing method comprising:
controlling, by a processor, output of a response to speech of a user in accordance with acquired information regarding a speech state of the user.

20. A program causing a computer to execute:
controlling output of a response to speech of a user in accordance with acquired information regarding a speech state of the user.
